# EUROPEAN PATENT APPLICATION

(11) **EP 3 879 920 A1**
(43) Date of publication of application: **15.09.2021**
(21) Application number: 21172528.8
(22) Date of filing: 31.12.2015
(51) Int. Cl.: H04W 76/25, H04W 88/06

(54) **SCHEDULING REQUEST THROTTLING FOR MULTI SUBSCRIBER IDENTITY MODULE (SIM) WIRELESS COMMUNICATION DEVICE**

(62) Divisional of application: 15911946.0
(71) Applicant: QUALCOMM Incorporated, San Diego, CA 92121-1714 (US)
(72) Inventor: KRISHNAMOORTHY, Parthasarathy, San Diego, 92121-1714 (US); GUO, Jiming, San Diego, 92121-1714 (US); SHAH, Chintan Shirish, San Diego, 92121-1714 (US); LIU, Haiqin, San Diego, 92121-1714 (US); ZHANG, Zhen, San Diego, 92121-1714 (US); MU, Yunsong, San Diego, 92121-1714 (US); KITABI, Ammar, San Diego, 92121-1714 (US); APPANI, Praveen Kumar, San Diego, 92121-1714 (US); KAIVARAM, Pavan, San Diego, 92121-1714 (US); BATHIJA, Jayesh, San Diego, 92121-1714 (US); MANDADAPU, Krishna Rao, San Diego, 92121-1714 (US); UMASANKAR, Premshankar, San Diego, 92121-1714 (US); SEKARBABU, Vigneshwar, San Diego, 92121-1714 (US); WU, Peng, San Diego, 92121-1714 (US); CHIN, Tom, San Diego, 92121-1714 (US)
(74) Representative: Harrison, Christopher John

(57) **Abstract**

Apparatuses and methods are described herein for a wireless communication device having a first subscription and a second subscription to request uplink grants associated with the first subscription from a base station associated with the first subscription using at least one Radio Frequency (RF) resource. Embodiments include, but not limited to, determining a length of a tune-away time interval in which the at least one RF resource is configured to be associated with the second subscription, transmitting at least one scheduling request associated with the first subscription after the tune-away time interval ends for a throttled time interval in response to the length of the tune-away time interval exceeding a threshold, and transmitting at least one scheduling request associated with the first subscription after the tune-away time interval ends for a default time interval in response to the length of the tune-away time interval not exceeding the threshold. A length of the throttled time interval is shorter than a length of the default time interval.

## Description

### BACKGROUND

A wireless communication device, such as a mobile phone device or a smart phone, may include at least one Subscriber Identity Module (SIM). Each SIM may enable one or more subscriptions. Each subscription may correspond to a Radio Access Technology (RAT). Specifically, with respect to multi-SIM wireless communication devices, when all SIMs are active, the wireless communication device may be a Multi-SIM-Multi-Active (MSMA) device. On the other hand, when one SIM is active while the rest of the SIM(s) is/are standing by, the wireless communication device may be a Multi-SIM-Multi-Standby (MSMS) device. The RATs may include, but are not limited to, Frequency Division Multiple Access (FDMA), Time Division Multiple Access (TDMA), Global System for Mobile Communications (GSM), Code Division Multiple Access (CDMA) (particularly, Evolution-Data Optimized (EVDO)), Universal Mobile Telecommunications Systems (UMTS) (particularly, Wideband Code Division Multiple Access (WCDMA), Long Term Evolution (LTE), Single Radio LTE (SRLTE), Simultaneous GSM and LTE (SGLTE), High-Speed Downlink Packet Access (HSDPA), and the like), Code Division Multiple Access 1x Radio Transmission Technology (1x), General Packet Radio Service (GPRS), Wi-Fi, Personal Communications Service (PCS), and other protocols that may be used in a wireless communications network or a data communications network.

A multi-SIM wireless communication device may enable two or more subscriptions that share a single set of Radio Frequency (RF) resource such that when one subscription is actively communicating, the other subscription(s) is on standby (for instance, in the MSMS devices). In particular scenarios, when such a wireless communication device is performing a long tune away to a second subscription and schedules a first subscription on standby, the wireless communication device may likely lose Radio Resource Control (RRC) messages from a base station associated with the first subscription, causing a RRC mismatch (disconnect) with the base station. Generally, longer tune-away may increase the likelihood of such mismatch/disconnect. However, a typical wireless communication device may assume that it is still connected to the base station. This is because that the wireless communication device may have missed (failed to successfully receive) the RRC release messages sent by the base station when the wireless communication device is tuned away to the second subscription, thus unable to receive communications via the first subscription. The base station, on the other hand, designates that the wireless communication device as being idle, given that the base station has already sent the RRC release messages (but which the wireless communication device has not successfully received).

A scheduling request (SR) may be transmitted by the wireless communication device to the base station requesting uplink grants for the first subscription after the tune-away to the second subscription ends. The wireless communication device may transmit data packets corresponding to the uplink grants allowed by the base station. The wireless communication device may send a default count (e.g., 64) of scheduling requests to the base station even after a long tune away. The base station, however, would not recognize the Cell Radio Network Temporary Identifier (C-RNTI) identifying the wireless communication device and would not provide any uplink grant in response to any of the scheduling requests, if the wireless communication device is considered idle (not connected) due to the RRC mismatch. However, power and time may still be consumed to monitor the scheduling request prohibit timer and to transmit the scheduling requests for the default count. Such fruitless process can be an inefficient use of time and can unnecessarily consume power, leading to inefficiency and negative user experience. In particular, even with the high consumption of power and time, the wireless communication device may not obtain any uplink grant, thus suffering from data stall.

### SUMMARY

Embodiments described herein relate to apparatuses and methods for efficiently requesting uplink grants for a first subscription by a wireless communication device having its RF resource being previously tuned away to a second subscription. Embodiments described herein conserve power and time otherwise spent in transmitting the full default count of scheduling requests following a long tune-away in which connectivity with the base station associated with the first subscription is likely lost. Embodiments can be implemented without additional hardware cost and network violations.

Embodiments described in more detail herein involves intelligently and selectively throttling the maximum count to transmit the scheduling requests after long tune-away gaps in order to avoid data stalls. Particularly, the maximum count may correspond to a throttled count that decreases and a length of the tune-away time interval increases.

In some embodiments, a method for a wireless communication device having a first subscription and a second subscription to request uplink grants associated with the first subscription is described, the method including tuning away from the first subscription to the second subscription for a tune-away time interval, transmitting at least one scheduling request associated with the first subscription for a throttled count in response to the tune-away time interval exceeding a threshold, wherein the throttled count is less than a default count, and initiating an uplink data Random Access Channel (RACH) process when no uplink grant has been received in response to any of the at least one scheduling request transmitted within the throttled count.

In some embodiments, the method further includes transmitting at least one scheduling request associated with the first subscription for the default count in response to the tune-away time interval not exceeding the threshold.

According to various embodiments, the at least one scheduling request is transmitted for the throttled count within a throttled time interval. The at least one scheduling request is transmitted for the default count within a default time interval. A length of the default time interval is longer than a length of the throttled time interval.

In some embodiments, the length of the default time interval is dynamically determined based on one or more of a length of the tune-away time interval, a first classification associated with the first subscription, or a second classification associated with the second subscription. The threshold is dynamically determined based on one or more of the first classification or the second classification.
In some embodiments, the method further includes receiving the default count from a base station during a Radio Resource Control (RRC) connection setup process.

In various embodiments, the uplink data RACH process is initiated in response to all of the at least one scheduling request has been transmitted within the throttled count and determining that no uplink grant corresponding to the at least one scheduling request has been received.

In some embodiments, the method further includes transmitting the at least one scheduling request up to the maximum count when at least one uplink grant is received in response to one or more of the at least one scheduling request transmitted within the throttled count.

In some embodiments, the method further includes determining the throttled count based, at least in part, on a length of the tune-away time interval.

According to some embodiments, the throttled count is inversely proportional to the length of the tune-away time interval.

In some embodiments, in determining the throttled count, the throttled count decreases as the length of the tune-away time interval increases.

In some embodiments, the method further includes determining the throttled count based, at least in part, on at least one of a first classification associated with the first subscription or a second classification associated with the second subscription.

According to some embodiments, a wireless communication device includes at least one radio frequency (RF) resource, a processor coupled to the at least one RF resource, configured to connect to a first Subscriber Identity Module (SIM) associated with a first subscription and to a second SIM associated with a second subscription, and configured with processor-executable instructions to tune the at least one RF resource away from the first subscription to the second subscription for a tune-away time interval, transmitting at least one scheduling request associated with the first subscription for a throttled count via the at least one RF resource in response to the tune-away time interval exceeding a threshold, wherein the throttled count is less than a default count; and initiating an uplink data RACH process when no uplink grant has been received in response to any of the at least one scheduling request transmitted within the throttled count.

In some embodiments, the processor is further configured to transmit at least one scheduling request associated with the first subscription via the at least one RF resource for the default count in response to the tune-away time interval not exceeding the threshold.

According to various embodiments, the at least one scheduling request is transmitted via the at least one RF resource for the throttled count within a throttled time interval. The at least one scheduling request is transmitted via the at least one RF resource for the default count within a default time interval. A length of the default time interval is longer than a length of the throttled time interval.

In some embodiments, the processor is further configured to dynamically determine the length of the default time interval based on one or more of a length of the tune-away time interval, a first classification associated with the first subscription, or a second classification associated with the second subscription and dynamically determine the threshold based on one or more of the first classification or the second classification.

According to some embodiments, the processor is further configured to receive the default count from a base station during a RRC connection setup process via the at least one RF resource.

In some embodiments, the processor is further configured to initiate the uplink data RACH process in response to all of the at least one scheduling request has been transmitted within the throttled count and determining that no uplink grant corresponding to the at least one scheduling request has been received.

In some embodiments, the processor is further configured to transmit the at least one scheduling request up to the maximum count when at least one uplink grant is received in response to one or more of the at least one scheduling request transmitted within the throttled count.

According to some embodiments, the processor is further configured to determine the throttled count based, at least in part, on a length of the tune-away time interval.

In some embodiments, the throttled count is inversely proportional to the length of the tune-away time interval.

In various embodiments, in determining the throttled count, the throttled count decreases as the length of the tune-away time interval increases.

According to various embodiments, the processor is further configured to determine the throttled count based, at least in part, on at least one of a first classification associated with the first subscription or a second classification associated with the second subscription.

In various embodiments, a method for a wireless communication device having a first subscription and a second subscription to request uplink grants associated with the first subscription using at least one RF resource, the method including determining that a tune-away time interval in which the at least one RF resource is tuned away from the first subscription to the second subscription exceeds a threshold, transmitting at least one scheduling request associated with the first subscription for up to a throttled count in response to the tune-away time interval exceeding the threshold, initiating an uplink data RACH process for the first subscription when no uplink grant is received in response to any of the at least one scheduling request transmitted within the throttled count, and transmitting at least one additional scheduling request further to the throttled count when at least one uplink grant is received in response to any of the at least one scheduling request transmitted within the throttled count.

In some embodiments, a sum of a number of the at least one additional scheduling request and the throttled count does not exceed a default count.

In various embodiments, the default count is received from a base station associated with the first subscription during a RRC connection setup process.

In some embodiments, the method further includes transmitting at least one scheduling request associated with the first subscription for up to the default count in response to the tune-away time interval not exceeding the threshold.

According to some embodiments, the throttled count is determined based on a length of the tune-away time interval.

In various embodiments, a method for a wireless communication device having a first subscription and a second subscription to request uplink grants associated with the first subscription from a base station associated with the first subscription using at least one RF resource, the method including determining a length of a tune-away time interval in which the at least one RF resource is configured to be associated with the second subscription, transmitting at least one scheduling request associated with the first subscription after the tune-away time interval ends for a throttled time interval in response to the length of the tune-away time interval exceeding a threshold, and transmitting at least one scheduling request associated with the first subscription after the tune-away time interval ends for a default time interval in response to the length of the tune-away time interval not exceeding the threshold. In some embodiments, a length of the throttled time interval is shorter than a length of the default time interval.

In some embodiments, the throttled time interval is determined based on the tune-away time interval.

According to some embodiments, the default time interval corresponds to a default count received from the base station during a RRC) connection setup process.

### BRIEF DESCRIPTION OF THE DRAWINGS

The accompanying drawings, which are incorporated herein and constitute part of this specification, illustrate exemplary embodiments of the disclosure, and together with the general description given above and the detailed description given below, serve to explain the features of the various embodiments.
FIG. 1 is a schematic diagram illustrating an example of a communication system in which scheduling request throttling can be implemented in accordance with various embodiments.
FIG. 2 is a component block diagram illustrating an example of a wireless communication device in which the scheduling request throttling can be implemented according to various embodiments.
FIG. 3 is a process flowchart diagram illustrating an example of a scheduling request throttling method according to various embodiments.
FIG. 4 is a schematic diagram illustrating an example of activities of Radio Frequency (RF) resource over time when a scheduling request throttling method is implemented according to various embodiments.
FIG. 5 is a process flowchart diagram illustrating an example of a scheduling request throttling method according to various embodiments.
FIG. 6A is a process flowchart diagram illustrating an example of a scheduling request throttling method according to various embodiments.
FIG. 6B is a process flowchart diagram illustrating an example of a scheduling request throttling method according to various embodiments.
FIG. 7 is a component block diagram of a wireless communication device suitable for use with various embodiments of scheduling request throttling.

### DETAILED DESCRIPTION

Various embodiments will be described in detail with reference to the accompanying drawings. Wherever possible, the same reference numbers may be used throughout the drawings to refer to the same or like parts. Different reference numbers may be used to refer to different, same, or similar parts. References made to particular examples and implementations are for illustrative purposes, and are not intended to limit the scope of the disclosure or the claims.

Some modern communication devices, referred to herein as wireless communication devices, user equipments, or mobile stations, may include any one or more or all of cellular telephones, smart phones, personal or mobile multi-media players, personal data assistants, laptop computers, personal computers, tablet computers, smart books, palm-top computers, wireless electronic mail receivers, multimedia Internet-enabled cellular telephones, wireless gaming controllers, and similar personal electronic devices. Such devices may include at least one Subscriber Identity Module (SIM), a programmable processor, memory, and circuitry for connecting to two or more mobile communication networks.

A wireless communication device may include one or more SIMs that provide users of the wireless communication devices with access to one or multiple mobile communication networks. The mobile communication networks are supported by Radio Access Technologies (RATs). Examples of wireless communication devices may include, but are not limited to, mobile phones, laptop computers, smart phones, and other mobile communication devices of the like that are configured to connect to one or more RATs. Examples of RATs may include, but are not limited to, Frequency Division Multiple Access (FDMA), Time Division Multiple Access (TDMA), Global System for Mobile Communications (GSM), Code Division Multiple Access (CDMA) (particularly, Evolution-Data Optimized (EVDO)), Universal Mobile Telecommunications Systems (UMTS) (particularly, Wideband Code Division Multiple Access (WCDMA), Long Term Evolution (LTE), Single Radio LTE (SRLTE), Simultaneous GSM and LTE (SGLTE), High-Speed Downlink Packet Access (HSDPA), and the like), Code Division Multiple Access 1x Radio Transmission Technology (1x), General Packet Radio Service (GPRS), Wi-Fi, Personal Communications Service (PCS), and other protocols that may be used in a wireless communications network or a data communications network. Each RAT may be associated with at least one subscription.

A wireless communication device provided with a plurality of SIMs and connected to two or more subscriptions with one subscription being active at a given time is a Multi-SIM-Multi-Standby (MSMS) device. In one example, the MSMS communication device may be a Dual-SIM-Dual-Standby (DSDS) communication device, which may include two SIM cards/subscriptions that may both be active on standby, but one is deactivated when the other one is in use. In another example, the MSMS communication device may be a Triple-SIM-Triple-Standby (TSTS) communication device, which includes three SIM cards/subscriptions that may all be active on standby, where two may be deactivated when the third one is in use. In other examples, the MSMS communication device may be other suitable multi-SIM communication devices, with, for example, four or more SIMs, such that when one is in use, the others may be deactivated.

On the other hand, a wireless communication device that includes a plurality of SIMs and connects to two or more subscriptions with two or more subscription being active at a given time may be a Multi-SIM-Multi-Active (MSMA) device. An example MSMA device is a Dual-SIM-Dual-Active (DSDA) communication device, which includes two SIM cards/subscriptions. Both SIMs/subscriptions may remain active. In another example, the MSMA device may be a Triple-SIM-Triple-Active (TSTA) communication device, which includes three SIM cards/subscriptions. All three SIMs/subscriptions may remain active. In other examples, the MSMA device may be other suitable multi-SIM communication devices with four or more SIMs, all of which may be active simultaneously.

Generally, embodiments described herein may be applicable to a MSMS wireless communication device in which out of two or more subscriptions, one subscription may be tuned into or active at a given time. Particularly, embodiments may related to a wireless communication device in which two or more subscriptions share a same Radio Frequency (RF) resource (RF resource sharing) and tune-aways are utilized to communicate with the subscriptions in a sequential manner, one at a time. Examples of combinations of subscriptions include, but are not limited to, LTE-and-1x, LTE-and-GSM, SRLTE-and-GSM, SGLTE-and-GSM, or the like.

Additionally, embodiments may likewise be applicable to wireless communication devices that disable communication activities of a first subscription due to interference with a second subscription when the first and second subscriptions utilize separate RF resources (in MSMA devices). In such cases, instead of tuning away to the second subscription, the RF resource associated with the first subscription may be disabled or blanked during communication activities of the second subscription. Thus, a period of time in which the RF resource associated with the first subscription is disabled (a disabled time interval) may correspond to a tune-away time interval relating to the MSMS scenarios as described herein.

As used herein, the terms "SIM," "SIM card," and "subscriber identification module" are used interchangeably to refer to a memory that may be an integrated circuit or embedded into a removable card, and that stores an International Mobile Subscriber Identity (IMSI), related key, and/or other information used to identify and/or authenticate a wireless device on a network and enable a communication service with the network. Because the information stored in a SIM enables the wireless device to establish a communication link for a particular communication service with a particular network, the term "SIM" may also be used herein as a shorthand reference to the communication service associated with and enabled by the information (e.g., in the form of various parameters) stored in a particular SIM as the SIM and the communication network, as well as the services, subscriptions, and RATs supported by that network, correlate to one another.

Embodiments described herein relate to throttling a maximum count for transmitting scheduling requests to reduce time and power consumed in transmitting the default count of scheduling requests in view of a high likelihood that the wireless communication device is considered idle by the base station.

Illustrating with a non-limiting example, the first subscription may be a subscription such as LTE, SRLTE, or SGLTE while the second subscription may be a subscription such as GSM or 1x.

The wireless communication device may determine the likelihood that the wireless communication device is considered idle, based on an actual tune-away time interval to the second subscription. In other words, the wireless communication device may determine whether the tune-away time interval is long enough to justify implementing the scheduling request throttling as described herein. If the tune-away time interval exceeds a threshold (e.g., a tune-away threshold time), then the scheduling request throttling may be triggered. Examples of the threshold may be 50 ms, 100 ms, 150 ms, and 200 ms. In other embodiments, the threshold may be another defined period of time. In other embodiments, the threshold may be dynamically determined by the wireless communication device based on either one or both of classifications associated with the first and second subscriptions. For example, depending on whether the first subscription is LTE, SRLTE, or SGLTE and/or whether the second subscription is GSM or 1x, the threshold for the tune-way time interval may be accordingly determined.

The wireless communication device may reduce the maximum count for transmitting the scheduling request from a default count to a throttled (reduced) count in response to the tune-away time interval exceeding the threshold. In some embodiments, a longer the tune-away time interval (indicating higher likelihood of being considered idle), results in a lower maximum count of scheduling request transmissions that may be allowed (lower throttled count to minimize usage of time/power). In particular embodiments, the throttled count may be inversely proportional to the tune-away time interval.

In a non-limiting example, when the tune-away time interval is 100 ms (with, for example, the threshold being 100 ms), the throttled count may be 5. In another non-limiting example, when the tune-away time interval is 200 ms, the throttled count may be 3. In yet another non-limiting example, when the tune-away time interval is 1 s, the throttled count may be 1 or 2.

Alternatively or additionally, the relationship (mapping) between the tune-away time interval and the throttled count may be further influenced based on either one or both of the classifications associated with the first and second subscriptions. That is, the value of the throttled count may vary corresponding to the classification of the first and/or second subscriptions. For example, the classification (LTE, SRLTE, SGLTE, GSM, or 1x) of the first and/or second subscriptions may map onto a particular throttled count. In further embodiments, the combination of the length of the tune-away time interval and the classification of the first and/or second subscriptions may map onto a particular throttled count.

When the wireless communication device does not receive any uplink grants within the throttled count of attempts, the wireless communication device may proceed with an uplink data Random Access Channel (RACH) process to set up communication (again) with the base station, so that the base station would consider the wireless communication device to be active (again) instead of idle. Not receiving any uplink grants within the throttled count may indicate a low confidence level of the wireless communication device still being connected to the base station.

On the other hand, when the wireless communication device receives at least one uplink grant from the base station within the throttled count, the wireless communication device may set the maximum count to the default count. At least one additional scheduling request further to the throttled count may be transmitted, up to the default count (including the previously transmitted throttled count). Receiving the at least one uplink grant from the base station within the throttled count may indicate a high confidence level that the wireless communication device is still connected to the base station, despite of a long tune-away, and that an uplink data RACH process is not necessary to renew the connection.

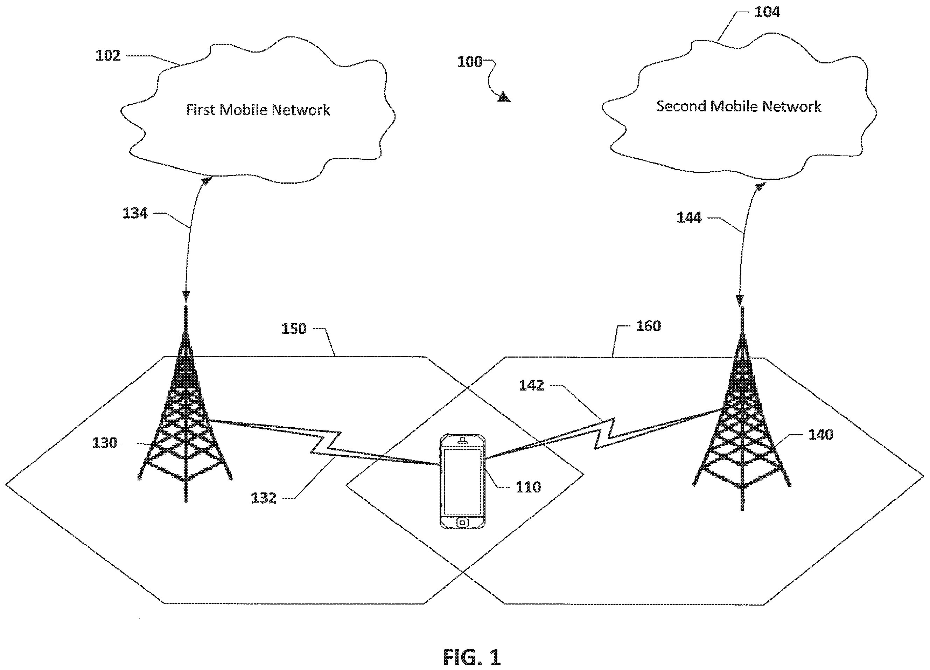

Various embodiments may be implemented within a communication system 100, an example of which is illustrated in FIG. 1. Referring to FIG. 1, a first mobile network 102 and a second mobile network 104 may each associate with a plurality of cellular base stations (e.g., a first base station 130 and a second base station 140). The first base station 130 may broadcast the first mobile network 102 in a first serving cell 150. The second base station 140 may broadcast the second mobile network 104 in a second serving cell 160. A wireless communication device 110 may be associated with both the first serving cell 150 and the second serving cell 160.

The wireless communication device 110 may be in communication with the first mobile network 102 through a first cellular connection 132 to the first base station 130. The first cellular connection 132 may correspond to the first subscription of the wireless communication device 110. The wireless communication device 110 may also be in communication with the second mobile network 104 through a second cellular connection 142 to the second base station 140. The second cellular connection 142 may correspond to the second subscription of the wireless communication device 110, as in a multi-SIM context. The first base station 130 may be in communication with the first mobile network 102 over a wired or wireless connection 134. The second base station 140 may be in communication with the second mobile network 104 over a wired or wireless connection 144.

The first cellular connection 132 and the second cellular connection 142 may be made through two-way wireless communication links. Each of the wireless communication links may be enable by any suitable protocol including, but not limited to, FDMA, TDMA, CDMA (e.g., EVDO), UMTS (e.g., WCDMA, LTE, SRLTE, SGLTE, HSDPA, or the like), GSM, 1x, GPRS, Wi-Fi, PCS, and/or another protocol used in a wireless communications network or a data communications network. By way of illustrating with a non-limiting example, the first cellular connection 132 may be a LTE, SRLTE, or SGLTE connection/subscription. The second cellular connection 142 may be a 1x or GSM connection/subscription. Other subscriptions (such as, but not limited to, WCDMA, HSDPA, EVDO, and the like) may be implemented in a similar manner.

Each of the first base station 130 and the second base station 140 may include at least one antenna group or transmission station located in the same or different areas. The at least one antenna group or transmission station may be tasked with signal transmission and reception. Each of the first base station 130 and the second base station 140 may include one or more processors, modulators, multiplexers, demodulators, demultiplexers, antennas, and the like for performing the functions of the base station. In some embodiments, each of the first base station 130 and the second base station 140 may be an access point, Node B, evolved Node B (eNodeB or eNB), Base Transceiver Station (BTS), or the like.

In various embodiments, the wireless communication device 110 may be configured to access the first mobile network 102 and the second mobile network 104 by virtue of the multi-SIM and/or the multi-mode SIM configuration of the wireless communication device 110 (e.g., via the first cellular connection 132 and the second cellular connection 142). When a SIM corresponding to a subscription is inserted, the wireless communication device 110 may access the mobile communication network associated with that subscription or RAT based on the information stored on the SIM.

While the wireless communication device 110 is shown connected to the mobile networks 102 and 104 via two cellular connections, in other embodiments (not shown), the wireless communication device 110 may establish additional network connections using at least one additional available subscription.

In some embodiments, the wireless communication device 110 may establish a wireless connection with a peripheral device (not shown) used in connection with the wireless communication device 110. For example, the wireless communication device 110 may communicate over a Bluetooth® link with a Bluetooth-enabled personal computing device (e.g., a "smart watch"). In some embodiments, the wireless communication device 110 may establish a wireless connection with a wireless access point (not shown), such as over a Wi-Fi connection. The wireless access point may be configured to connect to the Internet or another network over a wired connection.

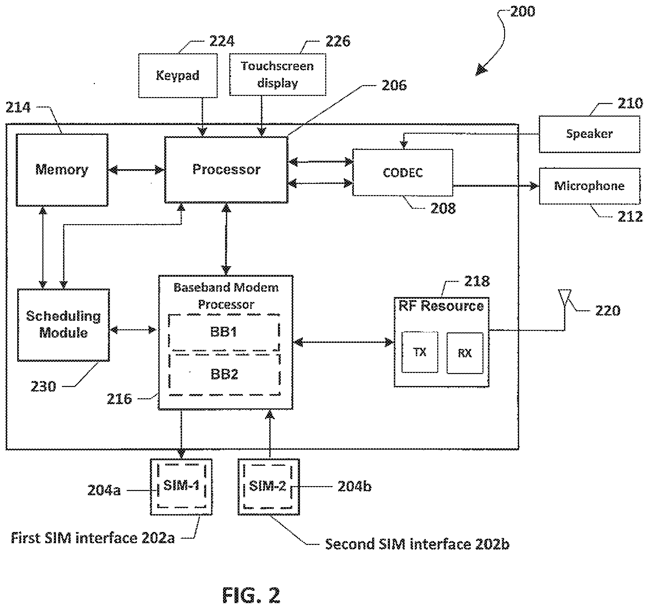

FIG. 2 is a component block diagram illustrating an example of a wireless communication device 200 in which the scheduling request throttling can be implemented according to various embodiments. According to various embodiments, the wireless communication device 200 may be an example of the wireless communication device 110 as described with reference to FIG. 1. Referring to FIGS. 1-2, the wireless communication device 200 may include a first SIM interface 202a, which may receive a first identity module SIM-1 204a that is associated with the first subscription. The wireless communication device 200 may also include a second SIM interface 202b, which may receive a second identity module SIM-2 204b that is associated with the second subscription.

A SIM in various embodiments may be a Universal Integrated Circuit Card (UICC) that is configured with SIM and/or Universal SIM (USIM) applications, enabling access to GSM and/or UMTS networks. The UICC may also provide storage for a phone book and other applications. Alternatively, in a CDMA network, a SIM may be a UICC removable user identity module (R-UIM) or a CDMA Subscriber Identity Module (CSIM) on a card. A SIM card may have a Central Processing Unit (CPU), Read Only Memory (ROM), Random Access Memory (RAM), Electrically Erasable Programmable Read-Only Memory (EEPROM) and Input/Output (I/O) circuits. An Integrated Circuit Card Identity (ICCID) SIM serial number may be printed on the SIM card for identification. However, a SIM may be implemented within a portion of memory of the wireless communication device 200, and thus need not be a separate or removable circuit, chip, or card.

A SIM used in various embodiments may store user account information, an IMSI, a set of SIM Application Toolkit (SAT) commands, and other network provisioning information, as well as provide storage space for phone book database of the user's contacts. As part of the network provisioning information, a SIM may store home identifiers (e.g., a System Identification Number (SID)/Network Identification Number (NID) pair, a Home PLMN (HPLMN) code, etc.) to indicate the SIM card network operator provider.

The wireless communication device 200 may include at least one controller, such as a processor 206, which may be coupled to a coder/decoder (CODEC) 208. The CODEC 208 may in turn be coupled to a speaker 210 and a microphone 212. The processor 206 may also be coupled to at least one memory 214. The processor 206 may include any suitable data processing device, such as a microprocessor. In the alternative, the processor 206 may be any suitable electronic processor, controller, microcontroller, or state machine. The processor 206 may also be implemented as a combination of computing devices (e.g., a combination of a Digital Signal Processor (DSP) and a microprocessor, a plurality of microprocessors, at least one microprocessor in conjunction with a DSP core, or any other such configuration).

The memory 214 may be a non-transitory processor-readable storage medium that stores processor-executable instructions executable by the processor 206. For example, the instructions may include routing communication data relating to the first or second subscription though a corresponding baseband-RF resource chain (including RF resource 218). The memory 214 may include any suitable internal or external device for storing software and data. Examples of the memory 214 may include, but are not limited to, RAM, ROM, floppy disks, hard disks, dongles or other Recomp Sensor Board (RSB) connected memory devices, or the like. The memory 214 may store an Operating System (OS), user application software, and/or executable instructions. The memory 214 may also store application data, such as an array data structure.

The processor 206 and the memory 214 may each be coupled to baseband modem processor 216. The SIMs in the wireless communication device 200 (e.g., the SIM-1 204a and/or the SIM-2 204b) may be associated with at least one baseband-RF resource chain. A baseband-RF resource chain may include the baseband modem processor 216, which may perform baseband/modem functions for communications on at least one SIM. The baseband modem processor 216 may include one or more amplifiers and radios, referred to generally herein as RF resource 218 or a RF chain.

The embodiments described herein may be applicable to wireless communication devices in which the first and second subscriptions share RF resource (particularly, the RF resource 218). Embodiments described herein may also be applicable to wireless communication devices in which the first and second subscriptions each has separate RF resource, but activities of the second subscription may nevertheless de-sense (e.g., interfere with) the first subscription so as to justify blanking or power back-off that prevent the first subscription from transmitting or receiving when the second subscription is communicating.

The RF resource 218 may include at least one transceiver that perform transmit/receive functions for the associated SIMs 204a, 204b of the wireless communication device 200. The RF resource 218 may include separate transmit and receive circuitry, or may include a transceiver that combines transmitter and receiver functions. The RF resource 218 may be coupled to a wireless antenna 220. The RF resource 218 may also be coupled to the baseband modem processor 216.

In some embodiments, the processor 206, the memory 214, the baseband modem processor 216, and the RF resource 218 may be included in the wireless communication device 200 as a system-on-chip. In some embodiments, the SIMs 202a, 202b and their corresponding interfaces 204a, 204b may be external to the system-on-chip. Further, various input and output devices may be coupled to components on the system-on-chip, such as interfaces or controllers. Example user input components suitable for use in the wireless communication device 200 may include, but are not limited to, a keypad 224, a touchscreen display 226, and the microphone 212.

In some embodiments, the keypad 224, the touchscreen display 226, the microphone 212, or a combination thereof, may perform the function of receiving a request to initiate an outgoing call. For example, the touchscreen display 226 may receive a selection of a contact from a contact list or receive a telephone number. In another example, either or both of the touchscreen display 226 and the microphone 212 may perform the function of receiving a request to initiate an outgoing call. For example, the touchscreen display 226 may receive a selection of a contact from a contact list or to receive a telephone number. As another example, the request to initiate the outgoing call may be in the form of a voice command received via the microphone 212. Interfaces may be provided between the various software modules and functions in the wireless communication device 200 to enable communication therebetween.

The wireless communication device 200 may include a scheduling module 230 configured to manage and/or schedule activities of the first and the second subscriptions on the RF resource 218 and the baseband modem processor 216. For example, the scheduling module 230 may be configured perform one or more processes described herein with respect to scheduling tune-aways to the second subscription, determining a length of the tune-away, determining the maximum count for sending the scheduling requests, transmitting the scheduling requests, initiating the uplink data RACH process, and the like.

In some embodiments, the scheduling module 230 may be implemented with the processor 206. For example, the scheduling module 230 may be implemented as a software application stored within the memory 214 and executed by the processor 206. Accordingly, such embodiments can be implemented with minimal additional hardware costs. However, other embodiments relate to systems and processes implemented with dedicated hardware specifically configured for performing operations described herein with respect to the scheduling module 230. For example, the scheduling module 230 may be implemented as a separate processing component (i.e., separate from the processor 206). The scheduling module 230 may be coupled to the memory 214, the processor 206, the baseband processor 216, and/or the RF resource 218 for performing the functions described herein.

Hardware and/or software for the functions may be incorporated in the wireless communication device 200 during manufacturing, for example, as a part of a configuration of an original equipment manufacturer (OEM) of the wireless communication device 200. In further embodiments, such hardware and/or software may be added to the wireless communication device 200 post-manufacture, such as by installing one or more hardware devices and/or software applications onto the wireless communication device 200.

In embodiments not shown in the FIGS., the wireless communication device 200 may include, among other things, additional SIMs, SIM interfaces, at least another RF resource associated with the additional SIMs, and additional antennas for connecting to additional mobile networks.

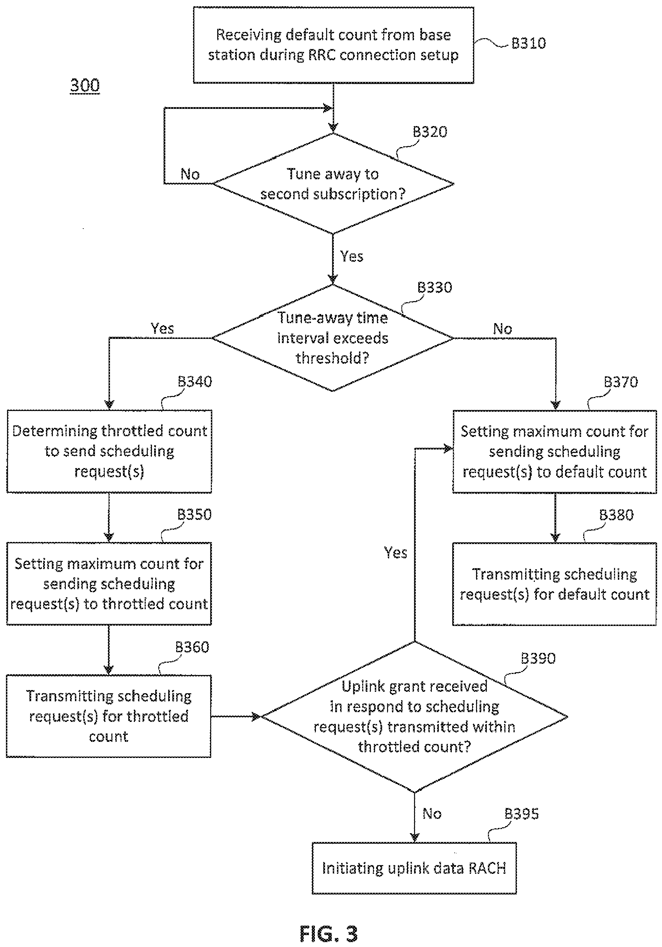

FIG. 3 is a process flowchart diagram illustrating an example of a scheduling request throttling method 300 according to various embodiments. Referring to FIGS. 1-3, the scheduling request throttling method 300 may be performed by the scheduling module 230 or the processor 206 of the wireless communication device 200.

At block B310, the scheduling module 230 or the processor 206 may receive, via the RF resource 218, the default count from the base station 130 during a Radio Resource Control (RRC) connection setup process. Particularly, the default count may be indicated by the scheduling request configuration portion of the RRC messages. The wireless communication device 200 may be communicating via the first subscription to receive the default count.

At block B320, the scheduling module 230 or the processor 206 may determine whether a tune-away to the second subscription has occurred. In some cases, the RF resource 218 may be periodically or selectively tuned away to the second subscription from the first subscription to perform various communications for the second subscription. For example, the RF resource 218 may be tuned away to the second subscription for page monitoring, cell reselection, neighbor measurement, or the like. In response to detecting no tune-away (B320:NO) has occurred, the scheduling module 230 or the processor 206 may continue at block B320.

In response to determining a tune-away (B320:YES), the scheduling module 230 or the processor 206 may determine whether the tune-away time interval exceeds the threshold at block B330. In some embodiments, the threshold may be static. Examples of the threshold may include, but are not limited to, 50 ms, 100 ms, 150 ms, and 200 ms. In other embodiments, the threshold may be 8 ms, 10 ms, and 20 ms.

In other embodiments, the threshold may be dynamically determined by the scheduling module 230 or the processor 206 based on either one or both of classifications associated with the first and second subscriptions. Illustrating with a non-limiting example in which the classification of only the first subscription may determine the threshold, when the first subscription is a first classification (e.g., LTE), the threshold may be determined to be a first value (e.g., 150 ms). Illustrating with another non-limiting example in which the classification of only the second subscription may determine the threshold, when the second subscription is a second classification (e.g., GSM), the threshold may be determined to be a second value (e.g., 200 ms). Illustrating with another non-limiting example in which the classifications of both the first and second subscriptions may determine the threshold, when the first subscription is the first classification (e.g., LTE) and the second subscription is the second classification (e.g., GSM), the threshold may be determined to be a third value (e.g., 100 ms).

In response to the scheduling module 230 or the processor 206 determining that the tune-away time interval exceeds the threshold (B330:YES), the scheduling module 230 or the processor 206 may determine the throttled count to send at least one scheduling request at block B340. The throttled count may be determined based on the length of the tune-away time interval. Generally, the throttled count may be decreased as the length of the tune-away time interval increases. In particular embodiments, the throttled count and the length of the tune-away time interval are inversely proportional. In some embodiments, ranges of the length of the tune-away time interval may be defined. Each range may be associated with a certain throttled count. Illustrating with a non-limiting example, when the tune-away time interval spans between 100 ms to 120 ms, the corresponding throttled count may be 5 (the threshold may be 100 ms). When the tune-away time interval is between 120 ms to 160 ms, the corresponding throttled count may be 4. When the tune-away time interval is between 160 ms to 500 ms, the corresponding throttled count may be 3. When the tune-away time interval is between 500 ms to 1 s, the corresponding throttled count may be 2. When the tune-away time interval exceeds 1 s in length, the corresponding throttled count may be 1.

In alternative embodiments, the value of the throttled count may be dynamically determined by the scheduling module 230 or the processor 206 based on either one or both of the classifications associated with the first and second subscriptions. Illustrating with a non-limiting example in which the classification of only the first subscription may determine the throttled count, when the first subscription is a first classification (e.g., LTE), the throttled count may be determined to be a first value (e.g., 10). Illustrating with another non-limiting example in which the classification of only the second subscription may determine the throttled count, when the second subscription is a second classification (e.g., GSM), the throttled count may be determined to be a second value (e.g., 5). Illustrating with another non-limiting example in which the classifications of both the first and second subscriptions may determine the throttled count, when the first subscription is the first classification (e.g., LTE) and the second subscription is the second classification (e.g., GSM), the throttled count may be determined to be a third value (e.g., 8). Different classifications of the subscription(s) may result in different throttled count.

In further embodiments, the throttled count may be determined based on both the length of the tune-away as well as the classifications associated with one or more of the first or second subscription. For example, a combination of factors including one or more of the length of the tune-away and the classifications associated with one or more of the first or second subscription may determine the value of the throttled count.

At block B350, the scheduling module 230 or the processor 206 may set the maximum count for sending the scheduling request to the throttled count. At block B360, the scheduling module 230 or the processor 206 may transmit, via the RF resource 218, at least one scheduling request for up to the throttled count (instead of the default count) being the maximum count.

At block B390, the scheduling module 230 or the processor 206 may determine whether any uplink grant has received in response to the at least one scheduling request transmitted within the throttled count. In response to determining that no uplink grant has been received from the first base station 130 (B390:NO), the scheduling module 230 or the processor 206 may initiate the uplink data RACH process with the first base station 130 to refresh the connectivity with the base station 130.

In response to the scheduling module 230 or the processor 206 determining that at least one uplink grant is received in response to the scheduling request transmitted within the throttled count (B390:YES), the scheduling module 230 or the processor 206 may set the maximum count for sending the scheduling requests to the default count at block B370. The scheduling module 230 or the processor 206 may then transmit, via the RF resource 218, at least one (additional) scheduling request in addition the throttled count at block B380. Particularly, the scheduling module 230 or the processor 206 may allow total transmission attempts up to the default count, including the previously transmitted throttled count. That is, the total number of additional scheduling requests(s) allowed to be transmitted at this point (after the throttled count has been transmitted) may equal to the default count minus the throttled count.

In response to the scheduling module 230 or the processor 206 determining that the tune-away time interval does not exceed the threshold (B330:NO), the scheduling module 230 or the processor 206 may set the maximum count for sending the scheduling requests to the default count at block B370. Failing to exceed the threshold may indicate that the connection is likely live still and not idle. Thus, no upload data RACH process may be necessary at this stage. The scheduling module 230 or the processor 206 may then transmit, via the RF resource 218, the scheduling request for the default count at block B380.

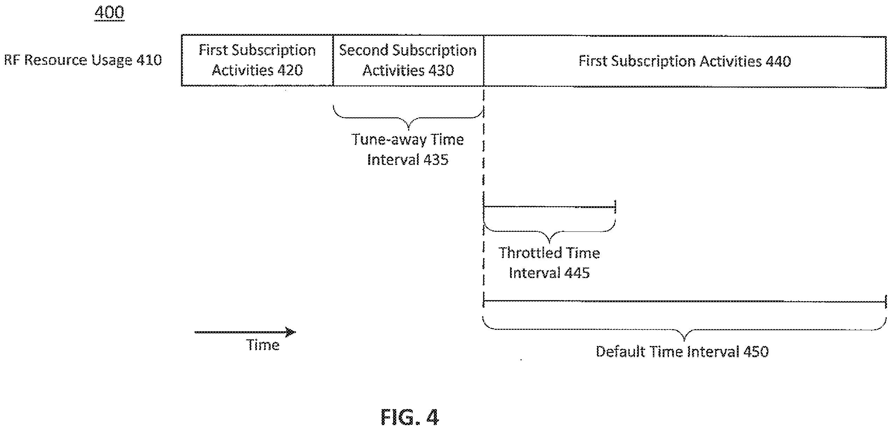

FIG. 4 is a schematic diagram illustrating an example of activities 400 of RF resource over time when a scheduling request throttling method (e.g., the scheduling request throttling method 300) is implemented according to various embodiments. Referring to FIGS. 1-4, the activities 400 may refer to RF resource usage 410 (for the RF resource 218) over time, including first subscription activities 420, second subscription activities 430, and first subscription activities 440.

When the first subscription activities 420 end, the scheduling module 230 or the processor 206 may be configured to tune the RF resource 218 to the second subscription for the second subscription activities 430. The second subscription activities may span for a tune-away time interval 435. A length of the tune-away time interval 435 may be used to determine whether the threshold has been exceeded when the second subscription activities 430 end. In particular embodiments when the second subscription activities 430 are periodic or cyclical, the length of the second subscription activities may be already known ahead of time by the scheduling module 230 or the processor 206 given that periodic activities (such as paging) may be scheduled (by the scheduling module 230 or the processor 206) in advance.

In response to the second subscription activities 430 ending, the scheduling module 230 or the processor 206 may engage the RF resource 218 in first subscription activities 440. Concerning uplink grant practices, the scheduling module 230 or the processor 206 may send the at least one scheduling request for a throttled time interval 445 or a default time interval 450.

The throttled time interval 445 may correspond to the throttled count determined at block B340. Scheduling request probes, which are a part of the RRC signaling message, may be transmitted every 10 ms or 20 ms. The throttled time interval 445 may be directly proportional to the throttled count. The throttled time interval 445 may be observed following block B395, according to which the uplink data RACH process may be initiated in response to the throttling time interval 445 ending.

The default time interval 450 may correspond to the default count received at block B310. Similarly, the default time interval 450 may be directly proportional to the default count. The default time interval 450 may be observed following block B380, according to which either the tune-away time interval does not exceed the threshold (B330:NO) or at least one uplink grant has been received within the throttled count (B390:YES).

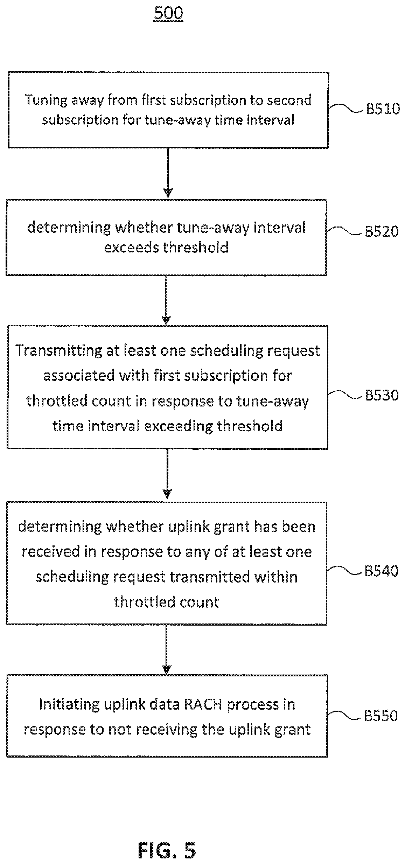

FIG. 5 is a process flowchart diagram illustrating an example of a scheduling request throttling method 500 according to various embodiments. Referring to FIGS. 1-5, the scheduling request throttling method 500 may be performed by the scheduling module 230 or the processor 206 of the wireless communication device 200. Each of blocks B510-B530 may correspond to one or more blocks of the scheduling request throttling method 300.

At block B510, the scheduling module 230 or the processor 206 may configure the RF resource 218 to tune away from the first subscription to the second subscription for the tune-away time interval 435.

At block B520, the scheduling module 230 or the processor 206 may configure the RF resource 218 to transmit at least one scheduling request associated with the first subscription for the throttled count in response to the tune-away time interval 435 exceeding the threshold. The at least one scheduling request sent within the throttled count may be sent during to the throttled time interval 445.

In response to detecting the length of the tune-away time interval 435 failing to exceed the threshold, the default count may be set as the maximum count. The at least one scheduling request sent within the default count may be sent during to the default time interval 450. The throttled count may be less than the default count. The throttled time interval 445 may be shorter than the default time interval 450.

At block B530, the scheduling module 230 or the processor 206 may initiate the uplink data RACH process when no uplink grant has been received in response to any of the at least one scheduling request transmitted within the throttled count or within the throttled time interval 445.

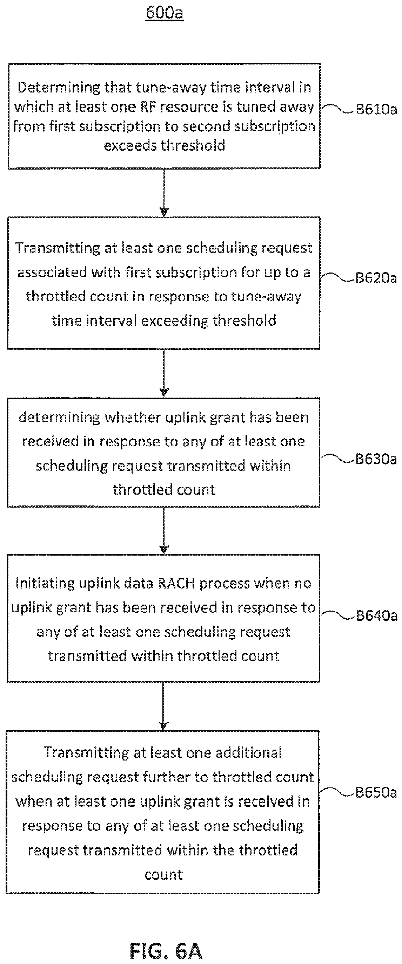

FIG. 6A is a process flowchart diagram illustrating an example of a scheduling request throttling method 600a according to various embodiments. Referring to FIGS. 1-6A, the scheduling request throttling method 600a may be performed by the scheduling module 230 or the processor 206 of the wireless communication device 200. Each of blocks B610a-B640a may correspond to one or more blocks of the scheduling request throttling methods 300 and 500.

At block B610a, the scheduling module 230 or the processor 206 may be configured to determine that the tune-away time interval 435 (in which the RF resource 218 is tuned away from the first subscription to the second subscription) exceeds the threshold.

At block B620a, the scheduling module 230 or the processor 206 may transmit the at least one scheduling request associated with the first subscription for up to the throttled count (within the throttled time interval 445) in response to the length of the tune-away time interval 435 exceeding the threshold.

At block B630a, the scheduling module 230 or the processor 206 may initiate the uplink data RACH process for the first subscription when no uplink grant is received in response to any of the at least one scheduling request transmitted within the throttled count.

At block B640a, the scheduling module 230 or the processor 206 may configure the RF resource 218 to transmit at least one additional scheduling request further to the throttled count when at least one uplink grant is received in response to any of the at least one scheduling request transmitted within the throttled count. The sum of a number of the at least one additional scheduling request and the throttled count does not exceed the default count. That is, the maximum count for any instance of scheduling request throttling does not exceed the default count. In alternative embodiments, at least one additional transmission may be granted beyond the default count when at least one further uplink grant has been received in response to any scheduling request beyond the throttled count but within the default count.

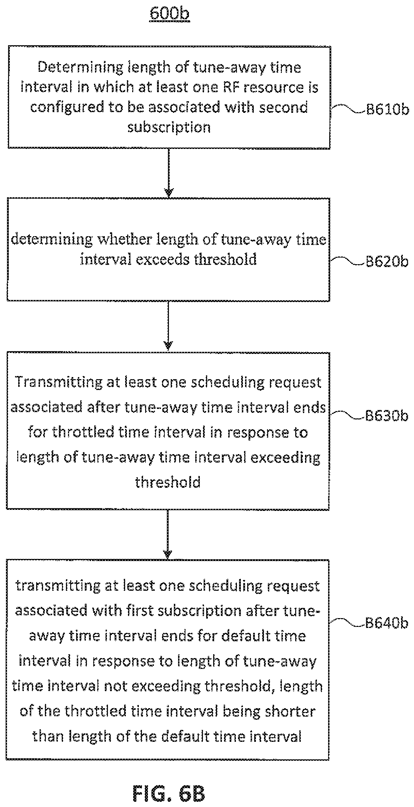

FIG. 6B is a process flowchart diagram illustrating an example of a scheduling request throttling method 600b according to various embodiments. Referring to FIGS. 1-6B, the scheduling request throttling method 600b may be performed by the scheduling module 230 or the processor 206 of the wireless communication device 200. Each of blocks B610b-B630b may correspond to one or more blocks of the scheduling request throttling methods 300, 500, and 600b.

At block B610b, the scheduling module 230 or the processor 206 may determine the length of the tune-away time interval 435 in which the RF resource 218 may be configured to be associated with the second subscription.

At block B620b, the scheduling module 230 or the processor 206 may configure the RF resource 218 to transmit at least one scheduling request associated with the first subscription in response to the tune-away time interval 425 ends for the throttled time interval 445 in response to the length of the tune-away time interval 435 exceeding the threshold.

At block B630b, the scheduling module 230 or the processor 206 may configure the RF resource 218 to transmit the at least one scheduling request associated with the first subscription for the default time interval 450 in response to the tune-away time interval 435 ends and in response to the length of the tune-away time interval 435 not exceeding the threshold. The length of the throttled time interval 445 is shorter than the length of the default time interval 445.

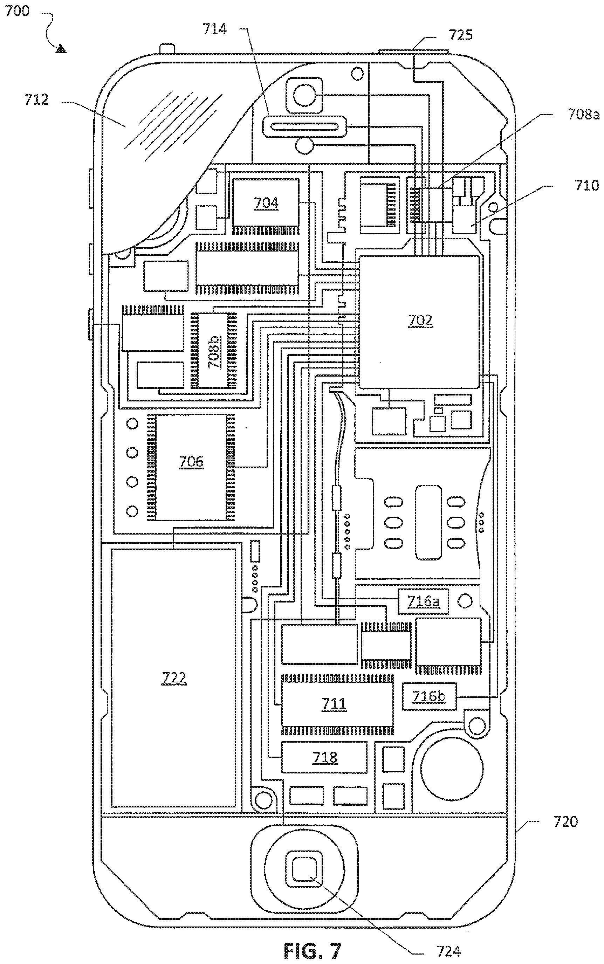

The various embodiments may be implemented in any of a variety of wireless communication device 200, an example of which is illustrated in FIG. 7, as wireless communication device 700. As such, the wireless communication device 700 may implement the process and/or the apparatus of FIGS. 1-6B, as described herein.

With reference to FIGS. 1-7, the wireless communication device 700 may include a processor 702 coupled to a touchscreen controller 704 and an internal memory 706. The processor 702 may be one or more multi-core integrated circuits designated for general or specific processing tasks. The memory 706 may be volatile or nonvolatile memory, and may also be secure and/or encrypted memory, or unsecure and/or unencrypted memory, or any combination thereof. The touchscreen controller 704 and the processor 702 may also be coupled to a touchscreen panel 712, such as a resistive-sensing touchscreen, capacitive-sensing touchscreen, infrared sensing touchscreen, etc. Additionally, the display of the wireless communication device 700 need not have touch screen capability.

The wireless communication device 700 may have one or more cellular network transceivers 708a, 708b coupled to the processor 702 and to at least one antenna 710 and configured for sending and receiving cellular communications. The transceivers 708a, 708b and antenna 710 may be used with the above-mentioned circuitry to implement the various embodiment methods. The cellular network transceivers 708a, 708b may be the RF resource 218. The antenna 710 may be the antenna 220. The wireless communication device 700 may include two or more SIM cards 716a, 716b, corresponding to SIM-1 204a and SIM-2 204b, coupled to the transceivers 708a, 708b and/or the processor 702. The wireless communication device 700 may include a cellular network wireless modem chip 711 (e.g., the baseband modem processor 216) that enables communication via at least one cellular network and is coupled to the processor 702.

The wireless communication device 700 may include a peripheral device connection interface 718 coupled to the processor 702. The peripheral device connection interface 718 may be singularly configured to accept one type of connection, or multiply configured to accept various types of physical and communication connections, common or proprietary, such as USB, FireWire, Thunderbolt, or PCIe. The peripheral device connection interface 718 may also be coupled to a similarly configured peripheral device connection port (not shown).

The wireless communication device 700 may also include speakers 714 for providing audio outputs. The wireless communication device 700 may also include a housing 720, constructed of a plastic, metal, or a combination of materials, for containing all or some of the components discussed herein. The wireless communication device 700 may include a power source 722 coupled to the processor 702, such as a disposable or rechargeable battery. The rechargeable battery may also be coupled to a peripheral device connection port (not shown) to receive a charging current from a source external to the wireless communication device 700. The wireless communication device 700 may also include a physical button 724 for receiving user inputs. The wireless communication device 700 may also include a power button 725 for turning the wireless communication device 700 on and off.

The various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment.

The foregoing method descriptions and the process flow diagrams are provided merely as illustrative examples and are not intended to require or imply that the steps of various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In some exemplary embodiments, the functions described may be implemented in hardware, software, firmware, or any combination thereof. If implemented in software, the functions may be stored as one or more instructions or code on a non-transitory computer-readable storage medium or non-transitory processor-readable storage medium. The steps of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to some embodiments without departing from the spirit or scope of the invention. Thus, the present invention is not intended to be limited to the embodiments shown herein but is to be accorded the widest scope consistent with the following claims and the principles and novel features disclosed herein.

### EXAMPLES:

Preferably, a method for a wireless communication device having a first subscription and a second subscription to request uplink grants associated with the first subscription, the method comprising:
tuning away from the first subscription to the second subscription for a tune-away time interval;
transmitting at least one scheduling request associated with the first subscription for a throttled count in response to the tune-away time interval exceeding a threshold, wherein the throttled count is less than a default count; and
initiating an uplink data Random Access Channel (RACH) process when no uplink grant has been received in response to any of the at least one scheduling request transmitted within the throttled count.

Preferably, further comprising transmitting at least one scheduling request associated with the first subscription for the default count in response to the tune-away time interval not exceeding the threshold.

Preferably, wherein:
the at least one scheduling request is transmitted for the throttled count within a throttled time interval;
the at least one scheduling request is transmitted for the default count within a default time interval; and
a length of the default time interval is longer than a length of the throttled time interval.

Preferably, wherein:
the length of the default time interval is dynamically determined based on one or more of a length of the tune-away time interval, a first classification associated with the first subscription, or a second classification associated with the second subscription; and
the threshold is dynamically determined based on one or more of the first classification or the second classification.

Preferably, further comprising receiving the default count from a base station during a Radio Resource Control (RRC) connection setup process.

Preferably, wherein the uplink data RACH process is initiated in response to all of the at least one scheduling request has been transmitted within the throttled count and determining that no uplink grant corresponding to the at least one scheduling request has been received.

Preferably, further comprising transmitting the at least one scheduling request up to the maximum count when at least one uplink grant is received in response to one or more of the at least one scheduling request transmitted within the throttled count.

Preferably, further comprising determining the throttled count based, at least in part, on a length of the tune-away time interval.

Preferably, wherein the throttled count is inversely proportional to the length of the tune-away time interval.

Preferably, wherein in determining the throttled count, the throttled count decreases as the length of the tune-away time interval increases.

Preferably, further comprising determining the throttled count based, at least in part, on at least one of a first classification associated with the first subscription or a second classification associated with the second subscription.

Preferably, a wireless communication device, comprising:
at least one radio frequency (RF) resource;
a processor coupled to the at least one RF resource, configured to connect to a first Subscriber Identity Module (SIM) associated with a first subscription and to a second SIM associated with a second subscription, and configured with processor-executable instructions to:
   tune the at least one RF resource away from the first subscription to the second subscription for a tune-away time interval;
   transmitting at least one scheduling request associated with the first subscription for a throttled count via the at least one RF resource in response to the tune-away time interval exceeding a threshold, wherein the throttled count is less than a default count; and
   initiating an uplink data Random Access Channel (RACH) process when no uplink grant has been received in response to any of the at least one scheduling request transmitted within the throttled count.

Preferably, wherein the processor is further configured to transmit at least one scheduling request associated with the first subscription via the at least one RF resource for the default count in response to the tune-away time interval not exceeding the threshold.

Preferably, wherein:
the at least one scheduling request is transmitted via the at least one RF resource for the throttled count within a throttled time interval;
the at least one scheduling request is transmitted via the at least one RF resource for the default count within a default time interval; and
a length of the default time interval is longer than a length of the throttled time interval.

Preferably, wherein the processor is further configured to:
dynamically determine the length of the default time interval based on one or more of a length of the tune-away time interval, a first classification associated with the first subscription, or a second classification associated with the second subscription; and
dynamically determine the threshold based on one or more of the first classification or the second classification.

Preferably, wherein the processor is further configured to receive the default count from a base station during a Radio Resource Control (RRC) connection setup process via the at least one RF resource.

Preferably, wherein the processor is further configured to initiate the uplink data RACH process in response to all of the at least one scheduling request has been transmitted within the throttled count and determining that no uplink grant corresponding to the at least one scheduling request has been received.

Preferably, wherein the processor is further configured to transmit the at least one scheduling request up to the maximum count when at least one uplink grant is received in response to one or more of the at least one scheduling request transmitted within the throttled count.

Preferably, wherein the processor is further configured to determine the throttled count based, at least in part, on a length of the tune-away time interval.

Preferably, wherein the throttled count is inversely proportional to the length of the tune-away time interval.

Preferably, wherein in determining the throttled count, the throttled count decreases as the length of the tune-away time interval increases.

Preferably, wherein the processor is further configured to determine the throttled count based, at least in part, on at least one of a first classification associated with the first subscription or a second classification associated with the second subscription.

Preferably, a method for a wireless communication device having a first subscription and a second subscription to request uplink grants associated with the first subscription using at least one Radio Frequency (RF) resource, the method comprising:
determining that a tune-away time interval in which the at least one RF resource is tuned away from the first subscription to the second subscription exceeds a threshold;
transmitting at least one scheduling request associated with the first subscription for up to a throttled count in response to the tune-away time interval exceeding the threshold;
initiating an uplink data Random Access Channel (RACH) process for the first subscription when no uplink grant is received in response to any of the at least one scheduling request transmitted within the throttled count; and
transmitting at least one additional scheduling request further to the throttled count when at least one uplink grant is received in response to any of the at least one scheduling request transmitted within the throttled count.

Preferably, wherein a sum of a number of the at least one additional scheduling request and the throttled count does not exceed a default count.

Preferably, wherein the default count is received from a base station associated with the first subscription during a Radio Resource Control (RRC) connection setup process.

Preferably, further comprising transmitting at least one scheduling request associated with the first subscription for up to the default count in response to the tune-away time interval not exceeding the threshold.

Preferably, wherein the throttled count is determined based on a length of the tune-away time interval.

Preferably, a method for a wireless communication device having a first subscription and a second subscription to request uplink grants associated with the first subscription from a base station associated with the first subscription using at least one Radio Frequency (RF) resource, the method comprising:
determining a length of a tune-away time interval in which the at least one RF resource is configured to be associated with the second subscription;
transmitting at least one scheduling request associated with the first subscription after the tune-away time interval ends for a throttled time interval in response to the length of the tune-away time interval exceeding a threshold; and
transmitting at least one scheduling request associated with the first subscription after the tune-away time interval ends for a default time interval in response to the length of the tune-away time interval not exceeding the threshold, wherein:
   a length of the throttled time interval is shorter than a length of the default time interval.

Preferably, wherein the throttled time interval is determined based on the tune-away time interval.

Preferably, wherein the default time interval corresponds to a default count received from the base station during a Radio Resource Control (RRC) connection setup process.

## Claims

1. A method for a wireless communication device having a first subscription and a second subscription to request uplink grants associated with the first subscription using at least one Radio Frequency, RF, resource, the method comprising:
determining whether a tune-away time interval in which the at least one RF resource is tuned away from the first subscription to the second subscription exceeds a threshold;
transmitting at least one scheduling request associated with the first subscription for up to a throttled count in response to the tune-away time interval exceeding the threshold;
determining whether an uplink grant has been received in response to any of the at least one scheduling request transmitted within the throttled count;
initiating an uplink data Random Access Channel, RACH, process for the first subscription in response to no uplink grant being received in response to any of the at least one scheduling request transmitted within the throttled count; and
transmitting at least one additional scheduling request further to the throttled count in response to at least one uplink grant being received in response to any of the at least one scheduling request transmitted within the throttled count.

2. The method of claim 1, wherein a sum of a number of the at least one additional scheduling request and the throttled count does not exceed a default count.

3. The method of claim 2, wherein the default count is received from a base station associated with the first subscription during a Radio Resource Control, RRC, connection setup process.

4. The method of claim 2, further comprising transmitting at least one scheduling request associated with the first subscription for up to the default count in response to the tune-away time interval not exceeding the threshold.

5. The method of claim 1, wherein the throttled count is determined based on a length of the tune-away time interval.

6. A method for a wireless communication device having a first subscription and a second subscription to request uplink grants associated with the first subscription from a base station associated with the first subscription using at least one Radio Frequency, RF, resource, the method comprising:
determining a length of a tune-away time interval in which the at least one RF resource is configured to be associated with the second subscription;
determining whether the length of the tune-away time interval exceeds a threshold;
transmitting at least one scheduling request associated with the first subscription after the tune-away time interval ends for a throttled time interval in response to the length of the tune-away time interval exceeding the threshold; and
transmitting at least one scheduling request associated with the first subscription after the tune-away time interval ends for a default time interval in response to the length of the tune-away time interval not exceeding the threshold;
wherein a length of the throttled time interval is shorter than a length of the default time interval.

7. The method of claim 6, wherein the throttled time interval is determined based on the tune-away time interval.

8. The method of claim 6, wherein the default time interval corresponds to a default count received from the base station during a Radio Resource Control, RRC, connection setup process.

9. The method of claim 6, further comprising transmitting at least one additional scheduling request after the throttled time interval in response to at least one uplink grant being received in response to any of the at least one scheduling request transmitted within the throttled time interval.
